# EUROPÄISCHE PATENTSCHRIFT

(11) **EP 2 953 838 B1**
(45) Veröffentlichungstag und Bekanntmachung des Hinweises auf die Patenterteilung: **11.01.2017**
(21) Anmeldenummer: 14701401.3
(22) Anmeldetag: 27.01.2014
(51) Int. Cl.: B60W 30/06

(54) **VERFAHREN UND VORRICHTUNG ZUM VORWÄRTSEINPARKEN EINES KRAFTFAHRZEUGS IN EINE QUERPARKLÜCKE**
METHOD AND DEVICE FOR THE FORWARD PARKING OF A MOTOR VEHICLE INTO A PERPENDICULAR PARKING SPACE
PROCEDE ET DISPOSITIF POUR STATIONNER UN VÉHICULE À MOTEUR EN MARCHE AVANT SUR UNE PLACE DE STATIONNEMENT EN BATAILLE

(30) Priorität: 08.02.2013 DE 102013002283
(43) Veröffentlichungstag der Anmeldung: 16.12.2015
(73) Patentinhaber: Volkswagen Aktiengesellschaft, 38440 Wolfsburg (DE)
(72) Erfinder: GEBERT, Hermann, 10715 Berlin (DE); TERKES, Mehmet, 38102 Braunschweig (DE); WENDLER, Torsten, 38100 Braunschweig (DE)
(86) Internationale Anmeldenummer: PCT/EP2014/051499
(87) Internationale Veröffentlichungsnummer: WO 2014/122040

(56) Entgegenhaltungen:
- DE-A1-102005 017 362
- DE-A1-102009 057 646
- DE-A1-102010 020 208
- DE-A1-102010 022 716

## Beschreibung

Die Erfindung betrifft ein Verfahren zum Vorwärtseinparken eines Kraftfahrzeugs in eine Querparklücke gemäß dem Oberbegriff des Anspruchs 1 sowie eine entsprechende Vorrichtung gemäß dem Oberbegriff des Anspruchs 7.

Derzeitige Einparkverfahren, bei denen der Fahrer von einem Fahrerassistenzsystem beim Einparken unterstützt wird, benötigen zur Berechnung einer geeigneten Einparktrajektorie die Geometrie der Querparklücke, die von entsprechenden Umfelddetektoren vermessen wird. Dabei wird eine Querparklücke üblicherweise während der Vorbeifahrt des Fahrzeugs an der Querparklücke vermessen, so dass nach der Vermessung das Fahrzeug zum Vorwärtseinparken wieder zurückgesetzt werden müsste, was bei der heutigen Verkehrssituation schwierig ist. Andererseits könnte ein Einparkmanöver in Rückwärtsrichtung durchgeführt werden, was aber auch zu Schwierigkeiten mit dem rückwärtigen Verkehr führen kann.

Querparkplätze sind insbesondere auf markierten Parkplätzen oder entlang breiter Strassen zu finden. Um den nachfolgenden Verkehr möglichst wenig zu behindern, um das Fahrzeug bei Parkplätzen bei Einkaufscentern einfach von rückwärts beladen zu können oder um Streitigkeiten über einen aufgefundenen Querparkplatz zu vermeiden, wird bei derartigen Situationen üblicherweise das Einparken eines Kraftfahrzeuges in eine Querlücke in Fahrtrichtung vorwärts durchgeführt. Bei einer Unterstützung eines Einparkens in eine Querlücke in Vorwärtsrichtung stellt sich das Problem der Vermessung der Querparklücke.

Aus der Druckschrift DE 10 2008 004 633 A1 ist ein Verfahren und eine Vorrichtung zur Erkennung und Vermessung einer Parklücke bekannt, wobei dreidimensionale Daten einer Umgebung des Fahrzeugs erfasst werden. Dabei werden Objekte in der Umgebung des Fahrzeugs in Parklücken begrenzende und nicht Parklücken begrenzende Objekte klassifiziert, so dass ein für das Fahrzeug als Parklücke geeigneter Raumbereich in der Umgebung des Fahrzeugs ermittelt werden kann. Diese Daten über den als Parklücke geeigneten Raumbereich werden an den Fahrer oder ein übergeordnetes System ausgegeben. Die Ausgabe der Daten erfolgt vor der Vorbeifahrt des Fahrzeugs an dem geeigneten Raumbereich.

Die Druckschrift DE 10 2010 030 213 A1 beschreibt ein Verfahren zur Erkennung einer Querparklücke und zur Unterstützung des Einparkens in die erkannte Querparklücke in Vorwärtsrichtung. Dabei wird nach einer initialen Ausrichtung des Fahrzeugs bezüglich einer Querparklücke durch den Fahrer eine Detektion von Kanten und Ecken der die Querparklücke begrenzenden Objekte vorgenommen. Der Beginn des Einparkens in die Querparklücke erfolgt daher zunächst fahrergesteuert. Das Einparksystem erkennt dann eine erste Ecke eines die Parklücke begrenzenden Fahrzeugs sowie eine zweite Fahrzeugkante eines zweiten die Fahrlücke begrenzenden Fahrzeugs. Daraus wird ein Fahrmanöver erkannt, welches dem Vorwärtseinparken in eine Querparklücke entspricht. Nach dem Erkennen des Fahrmanövers erfolgt ein Unterstützungsangebot an den Fahrer, wonach das Fahrerassistenzsystem nach der Zustimmung des Fahrers die Steuerung und Lenkung des Fahrzeugs auf Basis fortlaufender Umfeldmessungen sowie darauf gründender Berechnung der Einparkbahn übernimmt.

Aus der Druckschrift DE 10 2010 040 591 A1 ist ein Einparkassistent zum Unterstützen eines Einparkvorgangs eines Kraftfahrzeugs bekannt, welcher eine Mehrzahl von Parklücken detektiert, aus der Mehrzahl der detektierten Parklücken basierend auf einem Komfortabilitätsmaß auswählt und den Einparkvorgang in die Parklücke unterstützt. Das Komfortabilitätsmaß umfasst dabei mindestens eine vorbestimmte Bedingung, anhand der die detektierten Parklücken nach vermuteter Fahrerakzeptanz klassifizierbar sind.

Die Druckschrift DE 10 2009 039 084 A1 beschreibt ein Verfahren zum Unterstützen eines Fahrers eines Kraftfahrzeugs beim Vorwärtseinparken in eine Querparklücke. Dabei beinhaltet das Unterstützen, dass abhängig von durch eine Sensoreinrichtung des Fahrzeugs erfassten Umgebungsbedingungen eine durch das Kraftfahrzeug zumindest semi-autonom zu befahrende Parktrajektorie durch die Assistenzeinrichtung bestimmt wird. Wird die Geschwindigkeit des Fahrzeugs auf unterhalb eines Schwellenwertes verringert und erfolgt ein entsprechender Lenkwinkeleinschlag, so vermutet das Assistenzsystem einen Einparkwunsch des Fahrers und bietet Unterstützung an. Detektieren dann Umfeldsensoren des Assistenzsystems anhand die Querparklücke begrenzender parkender Fahrzeuge, dass das Eigenfahrzeug bereits bereichsweise in einer Querparklücke steht, so wird vom Assistenzsystem eine Einparktrajektorie berechnet. Vorausgesetzt wird allerdings, dass das Assistenzsystem eine Querparklücke erkannt hat bzw. erkennen kann, andernfalls kann kein assistierter Einparkvorgang durchgeführt werden. Zur Erkennung der Querparklücke sind daher die Parklücke begrenzende Objekte, wie andere parkende Fahrzeuge oder am Boden angebrachte Markierungen, notwendig.

Die Druckschrift DE 10 2010 022 716 A1 beschreibt ein Verfahren und eine Vorrichtung zum Auswählen einer Parkassistenzfunktion aus einer vorgegebenen Vielzahl von Parkassistenzfunktionen eines Parklenkassistenten mittels eines Eingabeelements des Parklenkassistenten und dem Fahrtrichtungsgeber eines Kraftfahrzeugs. Dabei sind die Parkassistenzfunktionen in zwei Gruppen angeordnet, wobei die erste Gruppe ein Einparken des Fahrzeugs betreffenden Funktionen umfasst und die zweite Gruppe ein Ausparken des Fahrzeugs betreffenden Funktionen umfasst. Es wird eine Auswahl zwischen den zwei Funktionengruppen als Funktion des Zündschalterzustands und einer zurückgelegten Fahrstrecke des Kraftfahrzeugs getroffen, so dass das Verfahren automatisch zwischen Einparkfunktionen und Ausparkfunktionen unterscheidet.

Nachteilig bei den bekannten Verfahren ist daher, dass die Querparklücke bzw. deren Lage vor Beginn der Parkassistenz bekannt sein muss, wobei die Erkennung von Querparklücken besonders schwierig ist. Daher sind die bekannten Verfahren oftmals nicht in der Lage eine Parkassistenz zu gewährleisten, da keine passende Querparklücke ermittelt wurde.

Der Erfindung liegt daher die Aufgabe zugrunde, ein Verfahren und eine Vorrichtung zum Einparken in eine Querparklücke in Vorwärtsrichtung mit verbessertem Einparkerfolg zu schaffen, ohne dass die Querparklücke vor Beginn der Assistenz bekannt sein muss.

Diese Aufgabe wird durch ein Verfahren mit den Merkmalen des Anspruchs 1 sowie durch eine Vorrichtung mit den Merkmalen des Anspruchs 7 gelöst. Bevorzugte Ausführungsformen der Erfindung sind Gegenstand der Unteransprüche.

Das erfindungsgemäße Verfahren zum Vorwärtseinparken eine Kraftfahrzeugs in eine Querparklücke, wobei das Kraftfahrzeug eine Einrichtung zur Erkennung von Objekten in seinem Umfeld aufweist, weist die folgenden Schritte auf:
- Erfassen eines Objekts im Umfeld des Kraftfahrzeugs,
- Bestimmen der Position des Objekts relativ zum Kraftfahrzeug, wobei
   der Bereich der Umfelderfassung zur Bestimmung der Position des Objekts in eine vorgegebene Anzahl von Sektoren eingeteilt ist, so dass die Position des erfassten Objekts mittels der Sektoren klassifiziert wird,
   Bewerten des erfassten Objekts als Anfang oder Ende einer Querparklücke als Funktion der Kombination aus der Position des Objekts relativ zum Kraftfahrzeug und der Blinkerstellung,
- Auswählen einer situationsbedingten Einparkstrategie als Funktion der Kombination aus der Position des Objekts relativ zum Kraftfahrzeug und der Blinkerstellung "links", "rechts" oder "neutral" unter der Annahme einer Querparklücke neben dem erfassten Objekt, und
- Ausführen eines Parkvorgangs basierend auf der situationsbedingten Einparkstrategie.

Bei dem erfindungsgemäßen Verfahren wird vermutet, dass neben dem erfassten Objekt eine Querparklücke vorhanden ist. In Zusammenhang mit der Position des Objekts relativ zum Fahrzeug und der Blinkerstellung wird ein unterstützter Parkvorgang mit einer situationsbedingten Einparkstrategie initiiert, ohne dass die Querparklücke anfänglich vermessen werden muss. Auf diese Weise kann ein Vorwärtseinparken in eine Querparklücke ohne vorherige Bestimmung der Querparklücke begonnen werden. Mit anderen Worten, das Fahrzeug nähert sich einem Objekt, welches vom Fahrzeug erfasst wird. Per Anweisung an das Assistenzsystem bestimmt der Fahrer, dass aus der aktuellen Position heraus ein Einparken in Vorwärtsrichtung begonnen werden soll und aus der Kombination von Position des Objekts und Blinkersteller wird der angenommene Ort der Querparklücke abgeleitet.

Dabei wird das erfasste Objekt als Anfang oder Ende einer Querparklücke gewertet, wobei die Kombination aus der Position des Objekts relativ zum Kraftfahrzeug und der Blinkerstellung entscheidet, ob das erfasste Objekt der Anfang oder das Ende der angenommenen Querparklücke ist. Auf diese einfache Weise wird der Anfang bzw. das Ende der Querparklücke festgelegt, ohne dass die Position oder das genaue Ausmaß der Querparklücke bekannt sind.

Der Bereich der Umfelderfassung zur Bestimmung der Position des Objekts ist in eine vorgegebene Anzahl von Sektoren eingeteilt, so dass die Position des erfassten Objekts mittels der Sektoren klassifiziert wird. Wird beispielsweise der Bereich der Umfelderfassung in vier Sektoren eingeteilt, wie dies später beschrieben werden wird, so bewirkt eine Klassifizierung der Position des erfassten Objekts die Zuordnung des erfassten Objekts zu einem Sektor. Dies ist zusammen mit der gesetzten Blinkerstellung ausreichend zur Auswahl einer Parkstrategie und Einleitung eines assistierten Einparkversuchs.

Weiter bevorzugt erfolgt eine ständige Umfelderfassung während der Ausführung des Parkvorgangs basierend auf der Einparkstrategie und eine Anpassung des Parkvorgangs an die Ergebnisse der aktuellen Umfelderfassung wird durchgeführt. Auf diese Weise "passt" sich der Einparkvorgang an neu erfasste Umfeldsituationen an. Der Einparkvorgang wird quasi mit einer Parkhypothese begonnen. Im Verlauf des Einparkvorgangs wird diese Einparkhypothese ständig an die Ergebnisse der Umfelderkennung angepasst. Wird nach der ersten Parkhypothese, also der anfänglich gewählten Einparkstrategie, ein weiteres Objekt erfasst, beispielsweise die Seitenkante eines die Querparklücke begrenzenden parkenden Fahrzeugs, so wird eine neue Parkhypothese oder Parkstrategie anhand der beiden erfassten Objekte berechnet, so dass der Parkvorgang in Vorwärtsrichtung zu einem erfolgreichen Ende geführt werden kann.

Insbesondere wird eine voreingestellte Einparkstrategie gewählt, wenn die Blinkerstellung "neutral" ist. Auf diese Weise wird ein versehentlicher "Leerlauf" des Verfahrens vermieden, wenn kein Blinker gesetzt ist und im Fall des "neutralen" Blinkers, d.h. des nicht gesetzten Blinkers, wird allein anhand der Position des erfassten Objekts relativ zum Fahrzeug eine voreingestellte Parkstrategie festgelegt.

Weiter bevorzugt ist zwischen den möglichen Kombinationen, bestehend aus Sektorklassifikation des Objekts und gesetzter Blinkerstellung, eine Prioritätenregelung vorgesehen, falls mehrere situationsbedingte Einparkstrategien möglich sind. Dies kann der Fall sein, wenn sich ein erfasstes Objekt beispielsweise über mehrere Sektoren erstreckt und die Klassifikation dem erfassten Objekt mehrere Sektoren zuweist. Dann ist es möglich, dass mehrere Kombinationen aus Sektorzugehörigkeit und gesetzter Blinkerstellung miteinander in Konkurrenz treten, so dass beispielsweise nicht eindeutig wäre, ob das erfasste Objekt nun als Anfang oder als Ende einer vermuteten Querparklücke anzusehen ist. Durch eine Prioritätenregelung wird Eindeutigkeit hergestellt.

Weiter bevorzugt wird der Parkvorgang abgebrochen, wenn eine plausible Ausrichtung und Orientierung des Kraftfahrzeugs während des Parkvorgangs nicht möglich ist. Dadurch wird sichergestellt, dass das Verfahren zu einem kontrollierten Ende gelangt, wenn während des Verlaufs des Einparkvorgangs keine definierte Querparklücke aufgefunden wird. Durch den Abbruch des Parkvorgangs wird die fahrerische Verantwortung wieder auf den Fahrer übertragen.

Bevorzugt wird ein Parkvorgang abgebrochen, wenn die während des Parkvorgangs durchlaufene Winkeländerung der Fahrzeugslängsachse zwischen Startposition und aktueller Position größer als ein vorgegebener Maximalwert ist, und/oder wenn die während des Parkvorgangs zurückgelegte Wegstrecke zwischen der Startposition und der aktuellen Position größer als ein vorgegebener Maximalwert ist. Ferner darf während eines Einparkvorgangs ein minimaler Abstand zu einem Objekt nicht unterschritten werden. Wird ein derartiger minimaler Abstandswert zu einem erfassten Objekt erreicht, so wird der Parkvorgang ebenfalls abgebrochen. Auf diese Weise wird vermieden, dass das Verfahren quasi "endlos" weiter sucht oder sich in eine aussichtlose Situation manövriert, falls keine vernünftige Querparklücke an Ort der vermuteten Querparklücke aufgefunden wird.

Die erfindungsgemäße Vorrichtung, ausgelegt zur Durchführung des im Vorangegangenen beschriebenen Verfahrens zum Vorwärtseinparken eines Kraftfahrzeugs in eine Querparklücke, weist eine Umfelderfassung und eine Assistenzeinrichtung zum Durchführen eines unterstützten Einparkvorgangs basierend auf einer vorgegebenen Einparkstrategie auf. Weiter weist die Vorrichtung auf:
- eine Einrichtung zur Klassifizierung der Position eines erfassten Objekts in der Umgebung des Kraftfahrzeugs,
- eine Einrichtung zur Auswahl einer Einparkstrategie basierend auf der Kombination aus klassifizierter Position des erfassten Objekts und gesetzter Blinkerstellung.

Mittels der Klassifikationseinrichtung und der Auswahleinrichtung kann vorteilhafterweise ein Einparken in Vorwärtsrichtung in eine angenommene Querparklücke erreicht werden, ohne dass die Querparklücke zu Beginn des assistierten Einparkvorgangs bekannt ist.

Weiter bevorzugt passt die Einrichtung zur Auswahl einer Einparkstrategie während des Einparkvorgangs basierend auf der ständigen Umfelderfassung die Einparkstrategie fortlaufend an die aktuelle Umfelderfassung an. Wird beispielsweise während des Einparkvorgangs ein weiteres Objekt im Umfeld des Kraftfahrzeugs erfasst, so wird eine angepasste Einparkstrategie basierend auf den bereits erfassten Objekten errechnet. Auf diese Weise arbeitet sich das Fahrzeug langsam in die mögliche Parklücke hinein, ohne ursprüngliche genaue Kenntnis der Parklücke.

Eine bevorzugte Ausführungsform der Erfindung wird nachfolgend anhand der Zeichnungen erläutert, Dabei zeigt
- Fig. 1: eine Darstellung des verwendeten Koordinatensystems,
- Fig. 2: eine Definition der verwendeten Sektoren zu Klassifizierung der Position eines Objektes,
- Fig. 3: die Parkstrategie für die Kombination Blinker links gesetzt und Objekt hinten links für eine Parklücke ohne Anfang,
- Fig. 4: die Parkstrategie für die Kombination Blinker links gesetzt und Objekt vorne für eine Parklücke ohne Anfang,
- Fig. 5: die Parkstrategie für die Kombination Blinker rechts gesetzt und Objekt vorne für eine Parklücke ohne Anfang,
- Fig. 6: die Parkstrategie für die Kombination Blinker links gesetzt und Objekt hinten rechts für eine Parklücke ohne Anfang,
- Fig. 7: die Parkstrategie für die Kombination Blinker rechts gesetzt und Objekt hinten rechts für eine Parklücke ohne Ende,
- Fig. 8: die Parkstrategie für die Kombination Blinker links gesetzt und Objekt hinten links für eine Parklücke ohne Anfang
- Fig. 9: ein erstes Beispiel einer Priorisierung zwischen konkurrierenden Kombinationen,
- Fig.10: ein zweites Beispiel einer Priorisierung zwischen konkurrierenden Kombinationen,
- Fig.11: der Abbruch des Parkvorgangs aufgrund einer Winkeländerung,
- Fig.12: der Abbruch des Parkvorgangs aufgrund des zurückgelegten Weges,
- Fig.13: ein erstes Beispiel von möglichen Orientierungen,
- Fig.14: ein zweites Beispiel von möglichen Orientierungen, und
- Fig. 15: ein drittes Beispiel von möglichen Orientierungen.

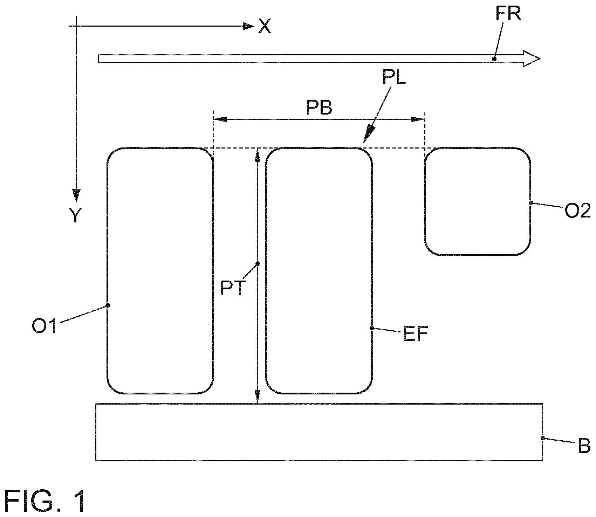

Fig. 1 zeigt das für das Szenario "vorwärts Querparken" üblicherweise verwendete Koordinatensystem, wobei die X-Achse in die Fahrtrichtung FR der Vorbeifahrt an einer Querparklücke PL und die Y-Achse in Richtung der Querparklücke PL zeigt. Dabei muss die Querparklücke PL nicht notwendigerweise in Richtung der Y-Achse angeordnet sein, d.h. senkrecht zur X-Achse angeordnet sein, sondern Schrägparklücken sind ebenfalls zulässig. Die Querparklücke PL wird im Beispiel der Fig. 1 durch ein erstes "tiefes" Objekt O1, ein zweites "nicht tiefes" Objekt 02 und eine Begrenzung B gebildet, wobei die Querparklücke PL durch eine Parklückenbreite PB und eine Parklückentiefe PT gekennzeichnet ist.

Dabei bedeutet "tiefes" Objekt, dass die Ausdehnung mit der Tiefe der Parklücke oder der Länge des Fahrzeugs vergleichbar ist, während "nicht tief" bedeutet, dass die Ausdehnung des Objekts deutlich kleiner ist, als die Tiefe der Parklücke bzw. die Länge des Fahrzeugs.

Ferner verläuft in Fig. 1 und den nachfolgenden Beispielen die Fahrtrichtung FR von links nach rechts und es wird auf der rechten Seite eingeparkt, soweit dies nicht anders angegeben ist. Es ist offensichtlich, dass diese Einschränkung hier nur beispielhaft zu verstehen ist. Gleiche Überlegungen gelten für den Linksverkehr bzw. das Einparken in Querparklücken auf der gegenüberliegenden Seite der Fahrbahn.

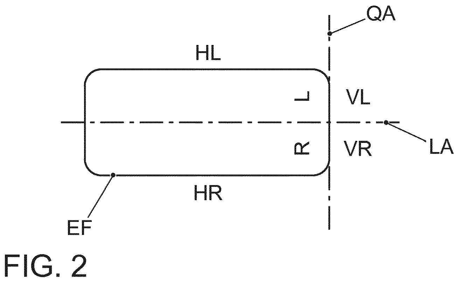

Fig. 2 zeigt die Fläche des einzuparkenden Eigenfahrzeugs EF, wobei mittels der Fahrzeuglängsachse LA unterschieden wird in eine rechte Fahrzeugseite R und eine linke Fahrzeugseite L. Senkrecht zur Fahrzeuglängsachse LA ist die vordere Querachse QA eingezeichnet, welche entlang der Fahrzeugfront des Eigenfahrzeugs verläuft. Mittels dieser beiden Achsen LA, QA werden vier Sektoren definiert, die den Erfassungsbereich der Umfeldsensoren (nicht dargestellt) des Eigenfahrzeugs EF für den Einparkvorgang in Vorwärtsrichtung bilden. Diese Sektoren sind ein vorderer linker Sektor VL, ein vorderer rechter Sektor VR, ein hinterer linker Sektor HL und ein rechter hinterer Sektor HR.

Als Ausgangsposition sind alle Positionen des Eigenfahrzeugs EF zugelassen, in denen sich ein Objekt im Erfassungsbereich der Umfeldsensoren befindet, wobei der Erfassungsbereich die vier oben erläuterten Sektoren VL, VR, HL, HR umfasst. Je nach Position der erkannten Objekte, deren Relation zum Eigenfahrzeug EF und des Blinkerzustands des gesetzten Blinkers wird eine situationsbedingte Einparkstrategie gewählt. Der Blinker hat prinzipiell drei Zustände, nämlich den Zustand neutral, d.h. der Blinker ist nicht gesetzt, sowie die beiden Zustände des gesetzten Blinkers, nämlich Blinker links gesetzt und Blinker rechts gesetzt.

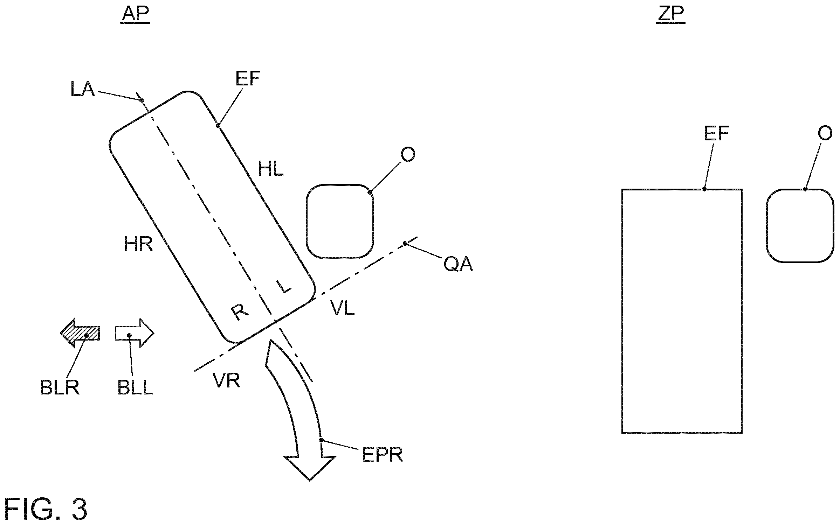

Von Interesse für die situationsbedingte Einparkstrategie sind die beiden Zustände des gesetzten Blinkers, also Blinker links gesetzt und Blinker rechts gesetzt. Diese Blinkerzustände werden in den folgenden Figuren 3 bis 10 als Pfeile mit den Bezugszeichen BLR für "Blinker rechts gesetzt" und BLL für "Blinker links gesetzt" dargestellt, wobei in den genannten Figuren der gesetzte Blinker anhand der Schraffur erkennbar ist. Falls der Fahrer keinen Blinker gesetzt hat, der Blinker sich also im neutralen Zustand befindet, und der Fahrer dennoch das Assistenzsystem aktiviert, so wird eine voreingestellte Einparkstrategie verwendet.

Nach der grundlegenden Definition des Koordinatensystems und der vier Sektoren VL, HL, VR, HR des Erfassungsbereichs des Eigenfahrzeugs EF werden in den Figuren 3 bis 6 exemplarisch Situationen von Sektor/Blinker-Kombinationen behandelt, in denen zu Beginn der Einparksituation, die auf der linken Seite der Figuren als Ausgangsposition AP gekennzeichnet ist, angenommen wird, dass es sich bei der Parksituation um eine Parklücke ohne Anfang handelt und dass in der gesetzten Blinkrichtung eine Parklücke frei ist. Der Parkvorgang wird nach der Detektion eines Objekts in einem Sektor und der Initiierung des Parkvorgangs durch den Fahrer zunächst "blind" begonnen und das Fahrzeug versucht sich in Blinkrichtung neben dem detektierten Objekt zu positionieren. Im Lauf des Parkvorgangs findet eine ständige Umfeldvermessung statt und das Assistenzsystem reagiert auf die neue Umgebung. Die Ausrichtung und Orientierung des Fahrzeugs wird an die neue Situation angepasst. Auf der rechten Seite in den genannten Figuren ist die beabsichtigte Zielposition ZP dargestellt. Dabei bedeutet eine Parklücke ohne Ende, dass das erfasste Objekt als Beginn einer möglichen Querparklücke betrachtet wird, deren Ende zu Beginn nicht bekannt ist. Analog bedeutet eine Parklücke ohne Anfang, dass das erfasste Objekt als Ende einer möglichen Querparklücke betrachtet wird, deren Anfang zu Beginn nicht bekannt ist.

Fig. 3 zeigt ein Eigenfahrzeug EF, in dessen hinterem linken Sektor HL ein Objekt O angeordnet ist. Mit anderen Worten, der Fahrer des Eigenfahrzeugs EF hat dieses in die linke Ausgangsposition manövriert, in der die Umfelderfassung ein Objekt im hinteren linken Sektor HL detektiert. In dieser Ausgangsposition setzt der Fahrer den Blinker rechts BLR und aktiviert den Einparkassistenten, welcher aufgrund der Kombination "Objekt im hinteren linken Sektor HL erfasst und Blinker rechts gesetzt BLR" das aufgefundenen Objekt O als Ende einer Querparklücke ansieht und versucht das Eigenfahrzeug rechts neben dem Objekt O auszurichten, was durch die als Pfeil dargestellte projektierte Einparkrichtung EPR dargestellt ist. Mit anderen Worten, die Querparklücke soll sich rechts neben dem Objekt O befinden. Dies ist im rechten Teil der Fig. 3 dargestellt, welches das Eigenfahrzeug EF in der gewünschten Zielposition neben dem Objekt O zeigt. Die dargestellte Ausrichtung, d.h. die Tiefen-, Mittenausrichtung und Orientierung des Eigenfahrzeugs EF erfolgen situationsbedingt aufgrund der ständigen Umfelderfassung. Ist eine plausible Ausrichtung und Orientierung nicht möglich, so wird der unterstützte Parkvorgang abgebrochen.

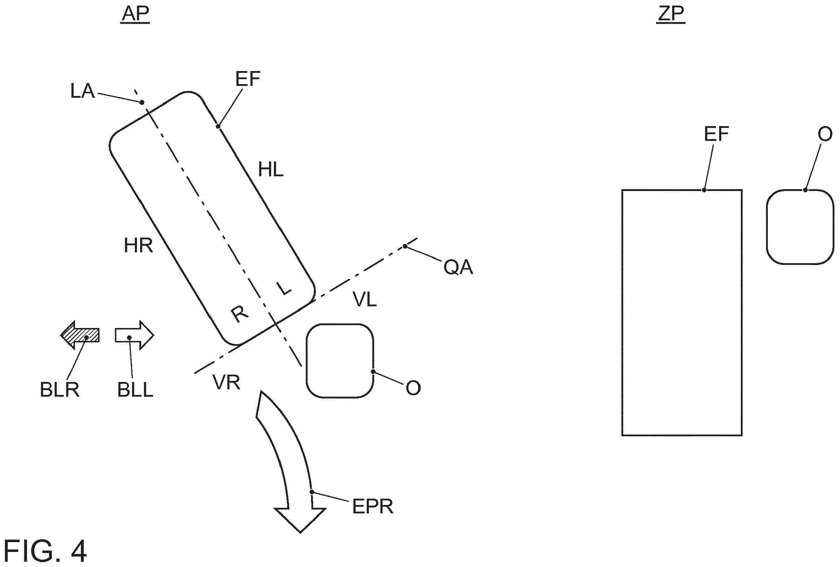

Fig. 4 zeigt die Situation, bei der sich das erfasste Objekt O exklusiv in einem vorderen Sektor oder in beiden vorderen Sektoren befindet und der Blinker rechts gesetzt ist. Im Beispielsfall hier befindet sich das Objekt O sowohl im vorderen linken Sektor VL als auch im vorderen rechten Sektor VR. Der Blinker BLR ist rechts gesetzt, was durch den hervorgehobenen Richtungspfeil zu erkennen ist. Der Fall behandelt daher sowohl die Kombination "Blinker rechts gesetzt und Objekt im vorderen linken Sektor erfasst "als auch die Kombination "Blinker rechts gesetzt und Objekt im vorderen rechten Sektor erfasst", wobei das Objekt O als Parklückenende gewertet wird. Der Richtungspfeil EPR zeigt die Richtung, in der das Assistenzsystem die Querparklücke vermutet und in die der Einparkvorgang initiiert wird. Der rechte Teil der Fig. 4 zeigt die beabsichtigte Situation nach einem erfolgreichen Einparkvorgang, in der sich das Eigenfahrzeug rechts neben dem Objekt befindet. Auch hier gilt, dass die Ausrichtung und Orientierung des Eigenfahrzeugs EF situationsbedingt aufgrund der ständigen Umfelderfassung während des Einparkvorgangs erfolgt.

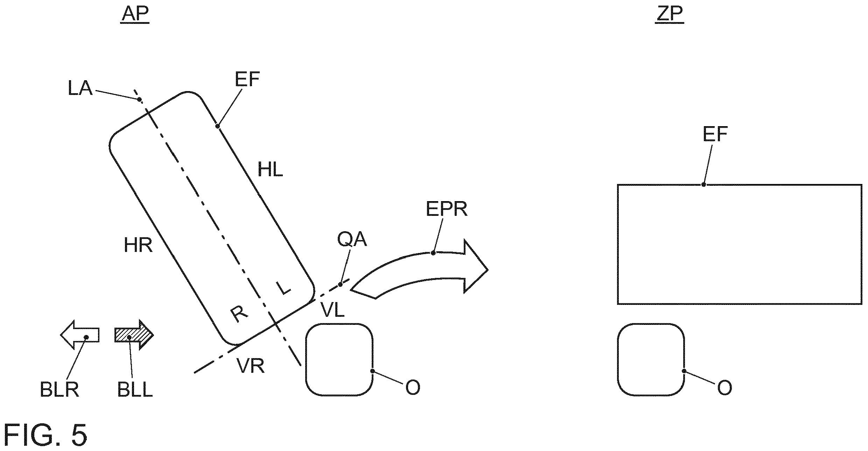

Fig. 5 entspricht hinsichtlich der Anordnung des Objekts O der Situation der Fig. 4, wobei der Fahrer in der Situation der Fig. 5 durch Setzen des Blinkers links BLL dem Assistenzsystem signalisiert, dass die Parkrichtung links neben dem Objekt O angesteuert werden soll, wie dies aus der im rechten Teil der Fig. 5 symbolisch dargestellten Zielposition des Eigenfahrzeugs EF und des Objekts O dargestellt ist. Mit anderen Worten, in Fig. 5 wird die Anfangssituation sowohl hinsichtlich der Kombination "Blinker links gesetzt und Objekt im vorderen linken Sektor erfasst "als auch hinsichtlich der Kombination "Blinker links gesetzt und Objekt im vorderen rechten Sektor erfasst" behandelt, wobei der Richtungspfeil EPR die gewünschte Einparkrichtung darstellt und das Objekt O als Parklückenende betrachtet wird.

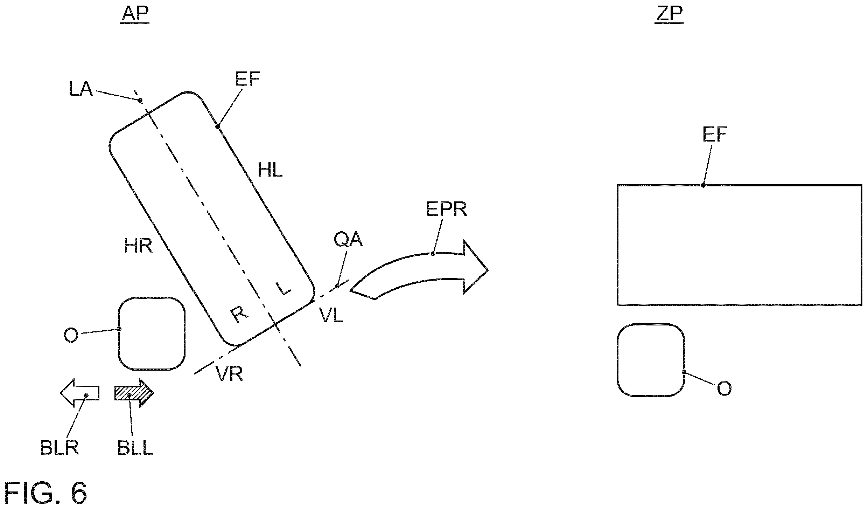

Fig. 6 zeigt die Ausgangssituation, bei der das erfasste Objekt O sich im hinteren rechten Sektor HR befindet und der linke Blinker BLL gesetzt ist. Mit anderen Worten, das Objekt O befindet sich rechts neben dem Eigenfahrzeug EF und die vom Fahrer gewünschte Parkrichtung EPR ist rechts. Dabei wird das Objekt O vom Assistenzsystem als Parklückenende gewertet und die Ausrichtung des Eigenfahrzeugs EF geschieht links neben dem Objekt, wie dies im rechten Teil der Fig. 6 als Zielposition ZP des Fahrzeugs EF dargestellt ist.

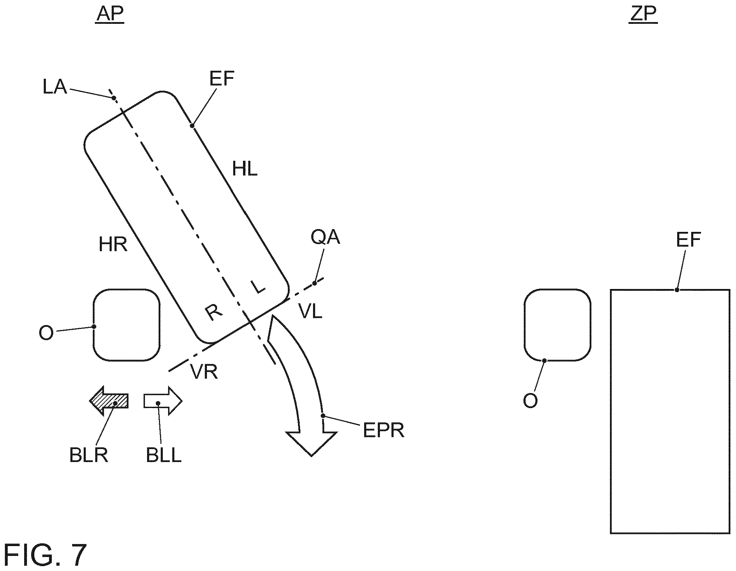

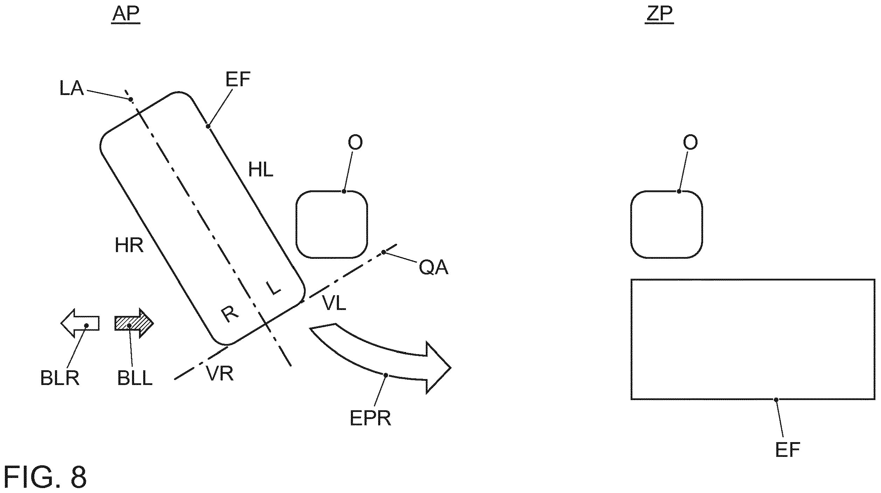

In den Figuren 7 und 8 werden Beispiele für den Sektor/Blinker-Kombinationen dargestellt, bei denen vorerst davon ausgegangen wird, dass es sich um eine Parklücke ohne Ende handelt, d.h. das erfasste Objekt wird als Parklückenanfang gewertet. In den Beispielen handelt es sich um die Kombinationen "Blinker links gesetzt und Objekt hinten links" sowie "Blinker rechts gesetzt und Objekt hinten rechts". Der Parkvorgang wird zunächst "blind" begonnen und das Fahrzeug versucht sich um das erfasste Objekt zu positionieren. Im Lauf des Parkvorgangs werden gegebenenfalls weitere Objekte vermessen und die Parkstrategie an das aktuell erfasste Umfeld angepasst. Auch hier wird im linken Teil der Figuren die Ausgangssituation AP und im rechten Teil die angestrebte Zielposition ZP dargestellt.

In Fig. 7 befindet sich das erfasste Objekt O exklusiv im hinteren rechten Sektor HR des Eigenfahrzeugs EF und es ist der Blinker rechts BLR gesetzt, wie dies im linken Teil der Fig. 7 dargestellt ist, welche die Ausgangsposition zeigt. Das Objekt wird folglich als Parklückenanfang bewertet und die Ausrichtung des Fahrzeugs EF soll links neben dem Objekt O erfolgen, wie dies als Zielposition im rechten Teil der Fig. 7 dargestellt ist.

Fig. 8 zeigt im linken Teil die Ausgangssituation bei der Initiierung des Einparkvorgangs. Das erfasste Objekt O befindet sich exklusiv in hinteren linken Sektor HL der Umfelderfassung des Eigenfahrzeugs EF und der Blinker links BLR ist gesetzt. Folglich versucht das Assistenzsystem eine Ausrichtung des Eigenfahrzeugs links vom Objekt, wie dies symbolisch im rechten Teil der Fig. 8 dargestellt ist, welche die gewünschte Zielposition darstellt. Ausrichtung und Orientierung des Eigenfahrzeugs erfolgt situationsbedingt aufgrund der ständigen Umfelderfassung. Ist eine plausible Ausrichtung und Orientierung nicht möglich, so wird der unterstützte Einparkvorgang kontrolliert abgebrochen.

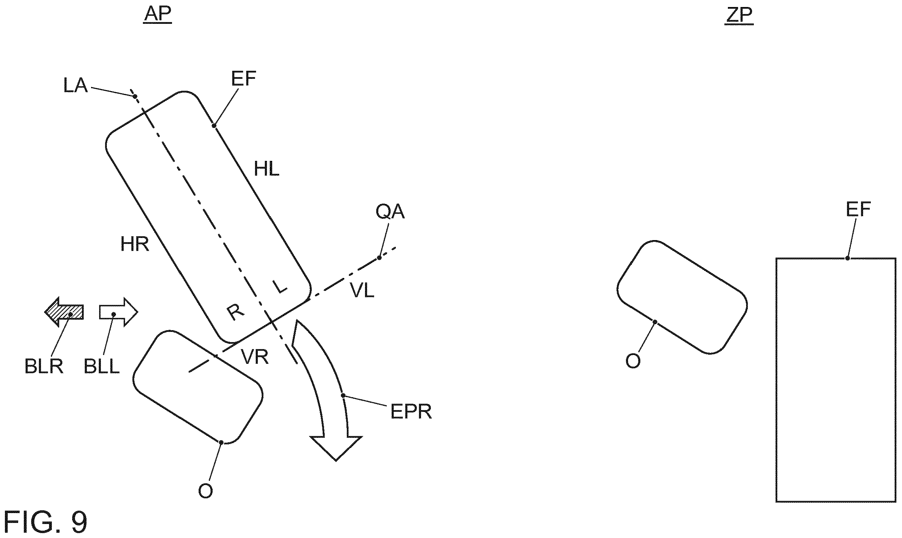

Anhand der Figuren 9 bis 12 werden konkurrierende Kombinationen und deren Priorisierung untereinander behandelt, da es vorkommen kann, dass die Anordnung des erfassten Objekts in den Sektoren und die eingestellte Blinkerstellung zu keiner eindeutigen Strategie führt. In diesem Fall müssen Regeln aufgestellt sein, die zu der Auswahl einer eindeutigen Einparkstrategie führen. Auch hier wird im linken Teil der Figuren die Ausgangssituation AP und im rechten Teil die angestrebte Zielposition ZP dargestellt.

Im linken Teil der Fig. 9 ist die Ausgangssituation dargestellt, bei der sich ein Objekt O sowohl im vorderen rechten Sektor VR als auch im hinteren Sektor HR befindet. Der Blinker ist hier im Beispiel mit Blinker rechts BLR gesetzt. Dies führt zu der Konkurrenzsituation der ersten Kombination "Objekt im Sektor vorne rechts und Blinker rechts gesetzt", die als erste Kombination bezeichnet wird, und der Kombination "Objekt im Sektor hinten rechts und Blinker rechts gesetzt", die hier im Beispiel der Fig. 9 als zweite Kombination bezeichnet wird.

Die erste Kombination "Objekt im Sektor vorne rechts und Blinker rechts gesetzt" entspricht der Situation der Fig. 4 und das Objekt O würde als Parklückenende gewertet werden, so dass die Zielposition rechts neben dem Objekt O wäre. Die zweite Kombination "Objekt im Sektor hinten rechts und Blinker rechts gesetzt" entspricht der Situation der Fig. 7 und das erfasste Objekt O würde als Parklückenanfang gewertet werden, mit der Folge, dass die Querparklücke links vom Objekt anzunehmen wäre. Um den Konflikt hinsichtlich der Zielposition aufzulösen, wird die zweite Kombination über die erste Kombination priorisiert, was zu der im rechten Teil der Fig. 9 dargestellten Zielposition des Eigenfahrzeugs EF führt, welche der Zielposition der Fig. 7 entspricht.

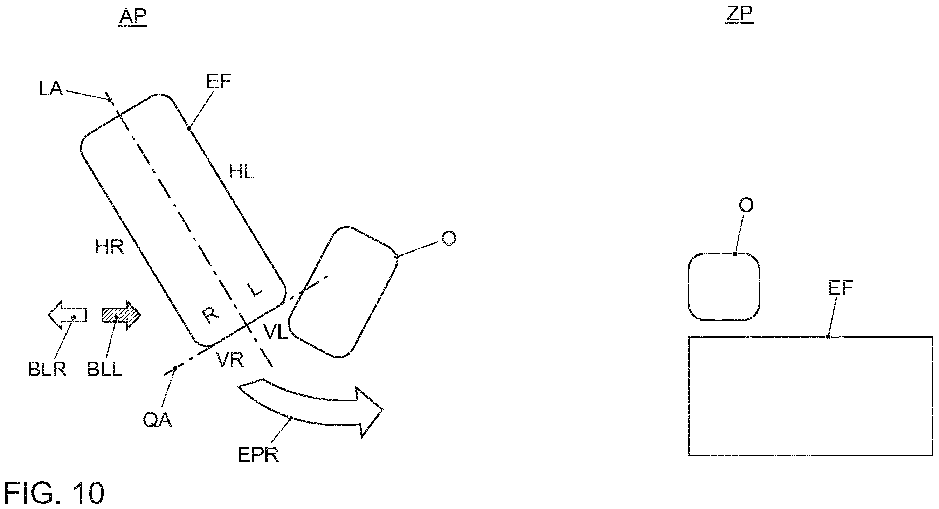

Im linken Teil der Fig. 10 ist die Ausgangssituation dargestellt, bei der sich ein Objekt O sowohl im vorderen linken Sektor VL als auch im hinteren linken rechten Sektor HL befindet. Der Blinker ist hier im Beispiel der Fig. 10 mit Blinker links BLL gesetzt. Dies führt zu der Konkurrenzsituation der ersten Kombination "Objekt im Sektor vorne links und Blinker links gesetzt", die als erste Kombination bezeichnet wird, und der Kombination "Objekt im Sektor hinten links und Blinker links gesetzt", die hier im Beispiel der Fig. 10 als zweite Kombination bezeichnet wird.

Die erste Kombination "Objekt im Sektor vorne links und Blinker links gesetzt" entspricht der Situation der Fig. 5 und das Objekt O würde als Parklückenende gewertet werden, so dass die Zielposition rechts neben dem Objekt O wäre. Die zweite Kombination "Objekt im Sektor hinten links und Blinker links gesetzt" entspricht der Situation der Fig. 8 und das erfasste Objekt O würde als Parklückenanfang gewertet werden, mit der Folge, dass die Querparklücke links vom Objekt anzunehmen wäre. Um den Konflikt hinsichtlich der Zielposition aufzulösen, wird auch hier die zweite Kombination über die erste Kombination priorisiert, was zu der im rechten Teil der Fig. 10 dargestellten Zielposition des Eigenfahrzeugs EF führt, welche der Zielposition der Fig. 8 entspricht.

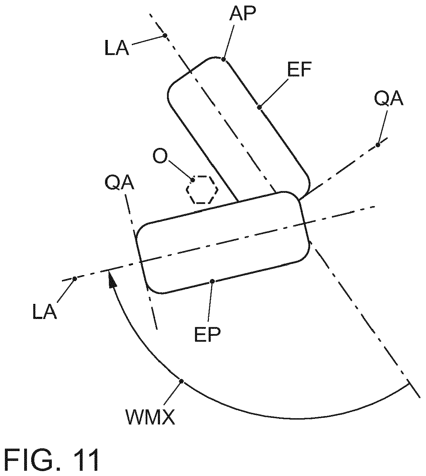

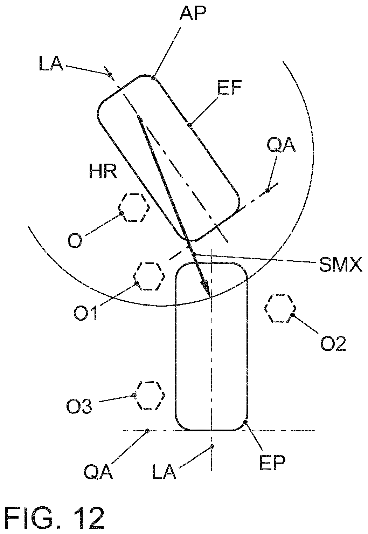

Es wurde bereits mehrfach erwähnt, dass im Lauf des Parkvorgangs eine ständige Umfeldvermessung stattfindet und das Assistenzsystem geeignet auf eine geänderte Umgebung reagiert. Dabei erfolgt die Ausrichtung und Orientierung des Eigenfahrzeugs situationsbedingt und wird im Verlauf des Parkvorgangs ständig an geänderte Bedingungen angepasst. Allerdings ist eine plausible Ausrichtung und Orientierung des einparkenden Fahrzeugs beispielsweise dann nicht möglich, wenn nur ein nicht ausreichend tiefes Objekt ohne Orientierung neben dem Fahrzeug zur Verfügung steht. Mit anderen Worten, handelt es sich bei dem erfassten Objekt, mittels dem der Parkvorgang initiiert wurde, beispielsweise um eine Laterne oder Ähnliches und wird während des Parkvorgangs kein weiteres Objekt erfasst, an dem sich das Fahrzeug ausrichten kann, so muss der Parkvorgang kontrolliert abgebrochen werden. Derartige Situationen, bei denen ein Einparkvorgang mangels Orientierung abgebrochen werden muss, sind in den Figuren 11 und 12 beispielhaft aufgeführt.

Fig. 11 zeigt die Anfangsposition AP eines Eigenfahrzeugs EF neben einem Objekt O, dass sich entsprechend der im Vorangegangenen erläuterten Nomenklatur im rechten hinteren Sektor des Eigenfahrzeugs EF befindet. Wurde der Blinker rechts gesetzt, so entspricht der beabsichtigte Einparkvorgang demjenigen der Fig. 7. Im Beispiel der Fig. 11 weist das Objekt O eine Sechskantform auf, so dass aufgrund seiner Vielzahl an Kanten keine Kante erfassbar ist, an der eine Ausrichtung des Parkvorgangs erfolgen könnte. Das Fahrzeug EF würde nun einen Einparkvorgang versuchen, der zu der dargestellten Endposition EP weiterhin neben dem Objekt O führen könnte. Eine Bedingung für den Abbruch des Einparkvorgangs ist, dass die Winkeländerung zwischen der Anfangsposition AP und der aktuellen Endposition EP, in der ein Abbruch stattfindet, einen vorgegebenen maximalen Winkel WMX erreicht hat. Solange der Winkel zwischen der Fahrzeuglängsachse der Anfangsposition und der derjenigen der aktuellen Endposition kleiner als der maximale Winkelwert ist, wird die Suche nach einer geeigneten Parkposition weitergeführt. Mit dem Erreichen oder Überschreiten des maximalen Winkelwertes erfolgt ein Abbruch des unterstützen Einparkvorgangs und der Fahrer übernimmt die vollständige Steuerung des Fahrzeugs. Der Wertebereich der Winkeländerung kann 0° bis 360° betragen, die Schrittweite der durch die Assistenz hervorgerufenen Winkeländerung könnte 10° betragen und bei einem maximalen Winkel WMX von 110° zwischen Ausgangsposition AP und aktueller Endposition EP würde der Parkvorgang abgebrochen werden.

Fig. 12 zeigt ein Beispiel für einen Abbruch eines Einparkvorganges basierend auf der während des Einparkvorgangs vom Fahrzeug zurückgelegten Wegstrecke. Dargestellt in Fig. 12 ist ein Eigenfahrzeug EF in der Ausgangsposition AP, in welcher sich ein Objekt O im hinteren rechten Sektor HR befindet. Ist der Blinker rechts gesetzt, so entspricht dies der Situation der Fig. 7 und das Fahrzeug vermutet die Parklücke links vom Objekt O und versucht dort einen Einparkvorgang. Zur Erläuterung ist in Fig. 12 das Objekt O als Sechskant dargestellt, so dass das Objekt O während des Einparkvorgangs keine Orientierung bietet. Im Verlauf des Einparkvorgangs wird ein weiteres Objekt O1 detektiert, welches ebenfalls kein Orientierung bietet. Anschließend werden noch weitere Objekte 02 und 03 von der Umfelderfassung des Eigenfahrzeugs EF erfasst, die jedoch ebenfalls aufgrund ihrer geometrischen Ausgestaltungen bzw. geometrischen Ausmaße keine Orientierung zur Ausrichtung des Eigenfahrzeugs bieten. Mit dem Erreichen einer maximalen Wegstrecke SMX, die in der Fig. 12 als Radius eines Kreises dargestellt ist, wird der Einparkvorgang abgebrochen. Der bevorzugter Wertebereich für die zurückgelegte Wegstrecke beträgt 0 bis 10m, die Schrittweite beträgt bevorzugt 0,3m und die maximale Wegstrecke SMX beträgt vorzugsweise 6m.

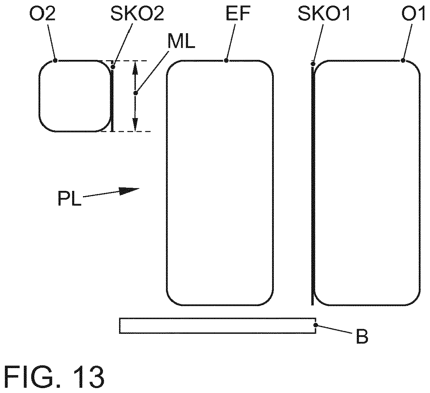

In den Figuren 13 bis 15 sind beispielhaft Umfeldsituationen beim Vorwärtseinparken dargestellt, die Orientierungen zur Ausrichtung des einzuparkenden Fahrzeugs bieten. Dabei wird unterschieden zwischen

Fig. 13 zeigt ein Eigenfahrzeug EF in einer Querparklücke PL nach dem Einparkvorgang. Die Querparklücke PL wird dabei von einem ersten tiefen Objekt O1 und einem zweiten nicht tiefen Objekt 02 eingeschlossen. Mögliche Orientierungen zur Bestimmung der Querparklücke PL und zur Ausrichtung des Eigenfahrzeugs EF während des Einparkvorgangs bieten:
a) die tiefe seitliche Kante SKO1 des ersten tiefen Objekts O1,
b) die nicht tiefe seitliche Kante SKO2 des zweiten nicht tiefen Objekts 02 sowie
c) eine Begrenzung B der Querparklücke PL in der Tiefe.

Anzumerken ist, dass zur Eignung als Orientierung für den Einparkvorgang eine Kante, wie beispielsweise die seitliche Kante SKO2 des zweiten Objekts 02, eine vorgegebene Mindestlänge ML aufweisen muss, andernfalls eine Ausrichtung an dieser Kante SKO2 nicht möglich ist und diese somit für das Assistenzsystem keine Orientierung bietet.

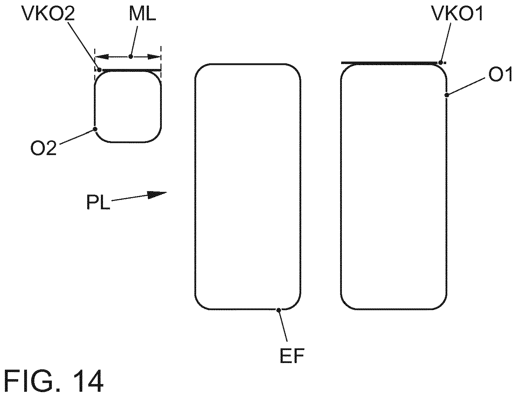

Fig. 14 zeigt weitere Möglichkeiten für die Ausrichtung des Eigenfahrzeugs EF in einer Querparklücke EF zwischen zwei Objekten O1 und 02. Das Eigenfahrzeug kann
d) unter einem Winkel von 90° zur vorderen Kante VKO1 des tiefen Objekts O1, und
e) unter einem Winkel von 90° zur vorderen Kante VKO2 des nicht tiefen Objekts 02.
ausgerichtet werden. Dies bedingt, dass die vorderen Kanten VKO1 oder VKO2 eine erfassbare Mindestlänge ML aufweisen.

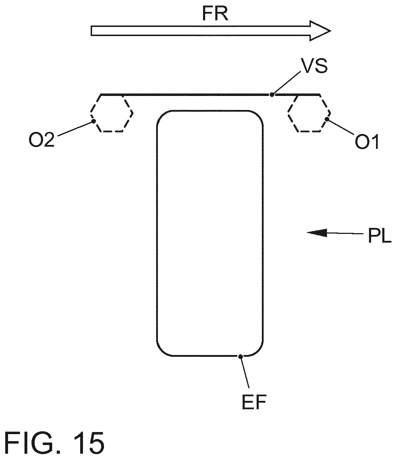

Fig. 15 zeigt den Fall, in dem das Eigenfahrzeug EF eine Querparklücke PL zwischen zwei Objekten O1 und O2 gefunden hat, wobei die beiden Objekte O1, 02 zwar die vordere Begrenzung der Parklücke PL bilden, aber keine Anhaltspunkte für eine Orientierung bieten. Dies kann an der geometrische Form der Objekte liegen, wie dies in der Fig. 15 aufgrund der Sechskantform der Fall ist. Ferner ist eine Orientierung an einer Kante nicht möglich, wenn diese nicht ausreichend lang ist.

Weitere Möglichkeiten zur Ausrichtung des Eigenfahrzeugs EF während des Einparkvorgangs bietet die Verbindungsstrecke VS zwischen dem durch das Objekt 02 definierten Parklückenanfang und dem durch das Objekt O1 definierten Parklückenende und die Richtung FR der Vorbeifahrt. Das Eigenfahrzeug kann daher
f) 90° zur Verbindungsstrecke VS und
g) 90° zur Richtung FR der Vorbeifahrt
ausgerichtet werden.

In den Figuren 13 bis 15 werden diverse Umfeldsituationen beschrieben, an denen sich der Fortgang des Einparkvorgangs orientieren kann und die zur Ausrichtung des Eigenfahrzeugs EF geeignet sind. Nun können während eines Einparkvorgangs mehrere der geschilderten Umfeldsituationen a) bis g) quasi gleichzeitig auftreten. Daher wird vorzugsweise zwischen den Umfeldsituationen eine Prioritätsregelung eingeführt, wobei wie üblich eine höhere Priorität einer niedrigere Priorität vorgeht. Für Umfeldsituationen mit gleichen Prioritäten kann eine geeignete Verrechnungsregelung festgelegt werden, beispielsweise dass gleiche Prioritäten mit gleichen Anteilen verrechnet werden.

So kann beispielsweise festgelegt werden, dass für die Umfeldsituationen a), b), c) und f) gilt:
Prio (a) > Prio(b) > Prio (c) > Prio (f).

Die Umfeldsituationen d), e) und g) sind weniger eindeutig, so dass diese beispielsweise jeweils mit einer geringen aber identischen Priorität versehen sein können.

## Patentansprüche

1. Verfahren zum Vorwärtseinparken eines Kraftfahrzeugs (EF) in eine Querparklücke (PL), wobei das Kraftfahrzeug (EF) eine Einrichtung zur Erkennung von Objekten (O, O1, 02, 03) in seinem Umfeld, eine Einrichtung zur Klassifizierung des Position eines erfassten Objekts, eine Einrichtung zur Auswahl eine Einparkstrategie und eine Assistenzeinrichtung zum Durchführen eines unterstützen Einparkvorgangs aufweist, mit den folgenden Schritten:
Erfassen eines Objekts (O) im Umfeld des Kraftfahrzeugs (EF) mittels der Einrichtung zur Erkennung von Objekten,
Bestimmen der Position des Objekts (O) relativ zum Kraftfahrzeug (EF), wobei der Bereich der Umfelderfassung zur Bestimmung der Position des Objekts in eine vorgegebene Anzahl von Sektoren (HL, HR, VL, VR) eingeteilt ist, so dass die Position des erfassten Objekts (O) mittels der Sektoren (HL, HR, VL, VR) klassifiziert wird, mittels der Einrichtung zur Klassifizierung der Position eines erfassten Objekts in der Umgebung des Kraftfahrzeugs,
Bewerten des erfassten Objekts (O) als Anfang oder Ende einer Querparklücke (PL) als Funktion der Kombination aus der klassifizierten Position des Objekts (O) relativ zum Kraftfahrzeug (EF) und der Blinkerstellung (BLR,BLL), mittels der Einrichtung zur Auswahl einer Einparkstrategie,
Auswählen einer situationsbedingten Einparkstrategie als Funktion der Kombination aus der Position des Objekts (O) relativ zum Kraftfahrzeug (EF) und der Blinkerstellung "links", "rechts" oder "neutral" (BLR, BLL) unter der Annahme einer Querparklücke (PL) neben dem erfassten Objekt (O), mittels der Einrichtung zur Auswahl einer Einparkstrategie,
Ausführen eines Parkvorgangs basierend auf der situationsbedingten Einparkstrategie durch die Assistenzeinrichtung zum Durchführen eines unterstützen Einparkvorgangs.

2. Verfahren nach Anspruch 1, **dadurch gekennzeichnet, dass** eine ständige Umfelderfassung während der Ausführung des Parkvorgangs basierend auf der Einparkstrategie erfolgt und eine Anpassung des Parkvorgangs an die Ergebnisse der aktuellen Umfelderfassung durchgeführt wird.

3. Verfahren nach einem der vorangegangenen Ansprüche, **dadurch gekennzeichnet, dass** eine voreingestellte Einparkstrategie gewählt wird, wenn die Blinkerstellung "neutral" ist.

4. Verfahren nach einem der vorangegangenen Ansprüche, **dadurch gekennzeichnet, dass** zwischen den möglichen Kombinationen bestehend aus Sektorklassifikation (HL, HR, VL, VR) des Objekts (O) und gesetzter Blinkerstellung (BLR, BLL) eine Prioritätenregelung vorgesehen ist, falls mehrere situationsbedingte Einparkstrategien möglich sind.

5. Verfahren nach einem der vorangegangenen Ansprüche, **dadurch gekennzeichnet, dass** der Parkvorgang abgebrochen wird, wenn eine plausible Ausrichtung und Orientierung des Kraftfahrzeugs (EF) während des Parkvorgangs nicht möglich ist.

6. Verfahren nach Anspruch 5, **dadurch gekennzeichnet, dass** die während des Parkvorgangs durchlaufene Winkeländerung der Fahrzeuglängsachse zwischen Startposition und aktueller Position größer einem vorgegebenen Maximalwert (WMX) ist, und/oder
dass die während des Parkvorgangs zurückgelegte Wegstrecke zwischen der Startposition (AP) und der aktuellen Position (EP) größer einem vorgegebenen Maximalwert (SMX) ist,
anderenfalls ein Abbruch des Parkvorgangs erfolgt.

7. Vorrichtung ausgelegt zur Durchführung des Verfahrens zum Vorwärtseinparken eines Kraftfahrzeugs (EF) in eine Querparklücke (PL) nach einem der vorangegangenen Ansprüche mit einer Einrichtung zur Erkennung von Objekten und einer Assistenzeinrichtung zum Durchführen eines unterstützten Einparkvorgangs basierend auf einer vorgegebenen Einparkstrategie,
**dadurch gekennzeichnet, dass**
die Vorrichtung zudem eine Einrichtung zur Klassifizierung der Position eines erfassten Objekts (O) in der Umgebung des Kraftfahrzeugs (EF) und eine Einrichtung zur Auswahl einer Einparkstrategie basierend auf der Kombination aus klassifizierter Position des erfassten Objekts und gesetzter Blinkerstellung aufweist.

8. Vorrichtung nach Anspruch 9, **dadurch gekennzeichnet, dass** die Einrichtung zur Auswahl einer Einparkstrategie während des Einparkvorgangs basierend auf der ständigen Umfelderfassung die Einparkstrategie fortlaufend an die aktuelle Umfelderfassung anpasst.

## Claims

1. Method for the forward parking of a motor vehicle (EF) into a perpendicular parking space (PL), wherein the motor vehicle (EF) has an apparatus for detecting objects (0, 01, 02, 03) in its surroundings, an apparatus for classifying the position of a detected object, an apparatus for selecting a parking strategy and an assistance apparatus for carrying out an assisted parking process, comprising the following steps:
detecting an object (0) in the surroundings of the motor vehicle (EF) by means of the apparatus for detecting objects,
determining the position of the object (0) relative to the motor vehicle (EF), wherein the region of the detection of the surroundings for determining the position of the object is divided into a predefined number of sectors (HL, HR, VL, VR) so that the position of the detected object (0) is classified by means of the sectors (HL, HR, VL, VR), by means of the apparatus for classifying the position of a detected object in the surroundings of the motor vehicle,
evaluating the detected object (0) as a start or end of a perpendicular parking space (PL) as a function of the combination of the classified position of the object (0) relative to the motor vehicle (EF) and the flashing indicator light position (BLR, BLL), by means of the apparatus for selecting a parking strategy,
selecting a situation-related parking strategy as a function of the combination of the position of the object (0) relative to the motor vehicle (EF) and the flashing indicator light position "left", "right" or "neutral" (BLR, BLL) assuming a perpendicular parking space (PL) next to the detected object (0), by means of the apparatus for selecting a parking strategy,
executing a parking process on the basis of the situation-related parking strategy by the assistance apparatus for carrying out an assisted parking process.

2. Method according to Claim 1, **characterized in that** continuous detection of the surroundings during the execution of the parking process takes place on the basis of the parking strategy, and the parking process is adapted to the results of the current detection of the surroundings.

3. Method according to one of the preceding claims, **characterized in that** a preset parking strategy is selected if the flashing indicator light position is "neutral".

4. Method according to one of the preceding claims, **characterized in that** if a plurality of situation-related parking strategies are possible a priority control between the possible combinations composed of sector classifications (HL, HR, VL, VR) of the object (0) and the set flashing indicator light position (BLR, BLL) is provided.

5. Method according to one of the preceding claims, **characterized in that** the parking process is aborted if a plausible alignment and orientation of the motor vehicle (EF) during the parking process is not possible.

6. Method according to Claim 5, **characterized in that** the change in angle which is passed through by the vehicle longitudinal axis between the starting position and the current position during the parking process is greater than a predefined maximum value (WMX), and/or
**in that** the distance traveled between the starting position (AP) and the current position (EP) during the parking process is greater than a predefined maximum value (SMX), and
otherwise the parking process is aborted.

7. Device configured to carry out the method for the forward parking of a motor vehicle (EF) into a perpendicular parking space (PL) according to one of the preceding claims with an apparatus for detecting objects and an assistance apparatus for carrying out an assisted parking process on the basis of a predefined parking strategy,
**characterized in that**
the device additionally has
an apparatus for classifying the position of a detected object (0) in the surroundings of the motor vehicle (EF) and
an apparatus for selecting a parking strategy on the basis of the combination of a classified position of the detected object and a set flashing indicator light position.

8. Device according to Claim 9, **characterized in that** the apparatus for selecting a parking strategy adapts the parking strategy continuously to the current detection of the surroundings on the basis of the continuous detection of the surroundings during the parking process.

## Revendications

1. Procédé pour stationner vers l'avant un véhicule automobile (EF) dans un emplacement de stationnement (PL) en épi,
le véhicule (EF) présentant un dispositif de détection d'objets (0, 01, 02, 03) dans son environnement, un dispositif de classement de la position d'un objet détecté, un dispositif de sélection d'une stratégie de stationnement et un dispositif d'assistance à l'exécution d'une manoeuvre de stationnement assistée,
le procédé comportant les étapes suivantes :
saisie d'un objet (0) dans l'environnement du véhicule automobile (EF) au moyen du dispositif de détection d'objets,
détermination de la position de l'objet (0) par rapport au véhicule automobile (EF), la zone de l'environnement saisie pour déterminer la position de l'objet étant divisée en un nombre prédéterminé de secteurs (HL, HR, VL, VR) de telle sorte qu'au moyen des secteurs (HL, HR, VL, VR), la position de l'objet (0) détecté soit classée par le dispositif de classement de la position d'un objet détecté dans l'environnement du véhicule,
au moyen du dispositif de sélection d'une stratégie de stationnement, évaluation de l'objet (0) détecté en tant que début ou fin d'un emplacement de stationnement (PL) en épi en fonction de la combinaison de la position classée de l'objet (0) par rapport au véhicule automobile (EF) et du réglage des clignotants (BLR, BLL),
au moyen du dispositif de sélection d'une stratégie de stationnement, sélection d'une stratégie de stationnement selon la situation, en fonction de la combinaison de la position de l'objet (0) par rapport au véhicule automobile (EF) et de la position "gauche" "droite" ou "neutre" (BLR, BLL) des clignotants, en posant l'hypothèse de la présence d'un emplacement de stationnement (PL) en épi à côté de l'objet (0) qui a été détecté, et
sur la base de la stratégie de stationnement et selon la situation, exécution d'une manoeuvre de stationnement par le dispositif d'assistance à l'exécution d'une manoeuvre assistée de stationnement.

2. Procédé selon la revendication 1, **caractérisé en ce qu'**une détection de l'environnement a lieu en permanence pendant l'exécution de la manoeuvre de stationnement sur la base de la stratégie de stationnement et **en ce qu'**une adaptation de la manoeuvre de stationnement est réalisée en fonction des résultats de la saisie de l'environnement en cours.

3. Procédé selon l'une des revendications précédentes, **caractérisé en ce qu'**une stratégie préréglée de stationnement est sélectionnée lorsque la position des clignotants est "neutre".

4. Procédé selon l'une des revendications précédentes, **caractérisé en ce qu'**entre les différentes combinaisons constituées d'une classification sectorielle (HL, HR, VL, VR) de l'objet (0) et de la position (BLR, BLL) dans laquelle se trouvent les clignotants, une régulation prioritaire est prévue au cas où plusieurs stratégies de stationnement selon la situation sont possibles.

5. Procédé selon l'une des revendications précédentes, **caractérisé en ce que** l'opération de stationnement est interrompue si un alignement et une orientation plausibles du véhicule automobile (EF) ne sont pas possibles pendant la manoeuvre de stationnement.

6. Procédé selon la revendication 5, **caractérisé en ce que** la manoeuvre de stationnement est interrompue si la modification de l'angle de l'axe longitudinal du véhicule suivie pendant la manoeuvre de stationnement entre la position initiale et la position en cours est supérieure à une valeur minimale prédéterminée (WMX) et/ou si le parcours suivi pendant la manoeuvre de stationnement entre la position initiale (AP) et la position en cours (EP) est supérieur à une valeur maximale prédéterminé (SMX).

7. Ensemble conçu pour la mise en oeuvre du procédé de stationnement par l'avant d'un véhicule automobile (EF) dans un emplacement de stationnement (PL) en épi selon l'une des revendications précédentes, l'ensemble présentant un dispositif de détection d'objets, un dispositif d'assistance permettant d'exécuter une manoeuvre de stationnement assistée sur la base d'une stratégie prédéterminée de stationnement,
**caractérisé en ce que**
l'ensemble présente en outre un dispositif de classement de la position d'un objet (0) qui a été détecté dans l'environnement du véhicule automobile (EF) et un dispositif de sélection d'une stratégie de stationnement sur la base de la combinaison de la position classée de l'objet saisi et la position dans laquelle les clignotants ont été placés.

8. Ensemble selon la revendication 9, **caractérisé en ce que** le dispositif de sélection de stratégie de stationnement pendant la manoeuvre de stationnement adapte en permanence la stratégie de stationnement à la détection en cours de l'environnement, sur la base de la saisie permanente de l'environnement.
